# EUROPEAN PATENT APPLICATION

(11) **EP 4 317 078 A1**
(43) Date of publication of application: **07.02.2024**
(21) Application number: 22779909.5
(22) Date of filing: 10.03.2022
(51) Int. Cl.: C01G 53/00, H01M 4/131, H01M 4/36, H01M 4/525, H01M 4/62, H01M 10/052, H01M 10/0562

(54) **COATED POSITIVE ELECTRODE ACTIVE SUBSTANCE, POSITIVE ELECTRODE MATERIAL, BATTERY, AND METHOD FOR PRODUCING COATED POSITIVE ELECTRODE ACTIVE SUBSTANCE**

(30) Priority: 30.03.2021 JP 2021058406
(71) Applicant: Panasonic Intellectual Property Management Co., Ltd., Osaka-shi, Osaka 540-6207 (JP)
(72) Inventor: FUJINOKI, Norihito, Tokyo 103-0022 (JP)
(74) Representative: Grünecker Patent- und Rechtsanwälte PartG mbB
(86) International application number: PCT/JP2022/010441
(87) International publication number: WO 2022/209686

(57) **Abstract**

A coated positive electrode active material 130 includes a positive electrode active material 110, a first coating layer 111, and a second coating layer 112. The first coating layer 111 coats at least a portion of a surface of the positive electrode active material 110. The second coating layer 112 coats at least a portion of a surface of a fundamental active material 120, which includes the first coating layer 111 and the positive electrode active material 110. The first coating layer 111 contains an oxide solid electrolyte. The second coating 112 layer contains Li, Ti, M, and F, where M is at least one element selected from the group consisting of Ca, Mg, Al, Y, and Zr.

## Description

### Technical Field

The present disclosure relates to a coated positive electrode active material, a positive electrode material, a battery, and a method for producing the coated positive electrode active material.

### Background Art

Patent Literature 1 discloses a positive electrode material including a positive electrode active material and a halide solid electrolyte. The halide solid electrolyte disclosed in Patent Literature 1 is a solid electrolyte containing lithium, yttrium, and at least one selected from the group consisting of chlorine, bromine, and iodine.

Patent Literature 2 discloses a positive electrode material including a positive electrode active material and a solid electrolyte. The positive electrode active material has a surface coated with a coating material. The coating material disclosed in Patent Literature 2 is a halogen solid electrolyte containing lithium and yttrium and containing chlorine and/or bromine.

### Citation List

### Patent Literature

PTL 1: International Publication No. 2019/135322
PTL 2: International Publication No. 2019/146236

### Summary of Invention

The present disclosure provides a coated positive electrode active material that can reduce an output resistance of a battery.

According to an aspect of the present disclosure, a coated positive electrode active material includes a positive electrode active material, a first coating layer, and a second coating layer. The first coating layer coats at least a portion of a surface of the positive electrode active material. The second coating layer coats at least a portion of a surface of a fundamental active material that includes the first coating layer and the positive electrode active material. The first coating layer contains an oxide solid electrolyte, and the second coating layer contains Li, Ti, M, and F, where M is at least one element selected from the group consisting of Ca, Mg, Al, Y, and Zr.

With the present disclosure, an output resistance of a battery can be reduced.

### Brief Description of Drawings

[Fig. 1] Fig. 1 is a cross-sectional view illustrating a schematic configuration of a positive electrode material of a first embodiment.
[Fig. 2] Fig. 2 is a cross-sectional view illustrating a schematic configuration of a battery of a second embodiment.

### Description of Embodiments

Embodiments of the present disclosure will be described below with reference to the drawings.

The descriptions below each describe a generic or specific example. The numerical values, compositions, shapes, thicknesses, electrical properties, structures of secondary batteries, electrode materials, and the like that are described below are merely illustrative and are not intended to limit the present disclosure. In addition, constituent elements not described in the independent claim, which represents the most generic concept, are optional constituent elements.

### (Underlying Knowledge Forming Basis of the Present Disclosure)

Patent Literature 1 describes a positive electrode material including a positive electrode active material and a halide solid electrolyte that contains lithium, yttrium, and at least one selected from the group consisting of chlorine, bromine, and iodine.

The present inventor diligently conducted studies and, consequently, discovered that a battery in which a halide solid electrolyte is used in a positive electrode material experience oxidative decomposition of the halide solid electrolyte during charging. The product resulting from the oxidative decomposition acts as a resistive layer and, therefore, increases an internal resistance of a battery during charging. It is inferred that the increase in the internal resistance of a battery during charging is due to an oxidation reaction of the at least one element selected from the group consisting of chlorine, bromine, and iodine present in the halide solid electrolyte.

Patent Literature 2 describes a battery that uses a positive electrode material that includes a positive electrode active material having at least a portion of a surface coated with a halogen solid electrolyte, and the halogen solid electrolyte contains lithium and yttrium and contains chlorine and/or bromine. As described in Patent Literature 1, the battery described in Patent Literature 2 also presents a problem with the oxidation resistance of the halide solid electrolyte that contains chlorine and/or bromine.

The present inventor discovered that a battery that uses a positive electrode material including a positive electrode active material that has at least a portion of a surface coated with a fluorine-containing halide solid electrolyte exhibit excellent oxidation resistance. The positive electrode material coated with a halide solid electrolyte can inhibit an increase in the internal resistance of a battery during charging. The mechanism is not specifically clear and is inferred to be as follows. Fluorine has the highest electronegativity among halogen elements. Consequently, fluorine is strongly bonded to a cation. Accordingly, in instances where fluorine is present in a halide solid electrolyte, the oxidation reaction of fluorine, that is, a side reaction that draws electrons from fluorine, is unlikely to proceed. As a result, the resistive layer resulting from oxidative decomposition is unlikely to be formed.

Furthermore, the present inventor studied an output resistance of a battery that uses a positive electrode material including a positive electrode active material that has at least a portion of a surface coated with a fluorine-containing halide solid electrolyte. As a result, it was discovered that a problem exists in that a high output resistance is exhibited during discharging. The mechanism is not specifically clear and is inferred to be as follows. At an interface at which the positive electrode active material is in contact with the fluorine-containing halogen solid electrolyte, anion substitution occurs between some oxygen ions of the positive electrode active material and some fluorine ions of the halide solid electrolyte. Consequently, a resistive layer is formed at the interface between the positive electrode active material and the halide solid electrolyte. The resistive layer increases the output resistance of a battery.

The present inventor diligently conducted studies to reduce the output resistance of a battery and, consequently, discovered a positive electrode material that can inhibit the formation of the resistive layer at the interface between a positive electrode active material and a fluorine-containing halide solid electrolyte. In instances where the positive electrode material is used, the output resistance of a battery can be reduced.

### (Overview of Aspects of the Present Disclosure)

According to a first aspect of the present disclosure, a coated positive electrode active material includes
a positive electrode active material;
a first coating layer coating at least a portion of a surface of the positive electrode active material; and
a second coating layer coating at least a portion of a surface of a fundamental active material that includes the first coating layer and the positive electrode active material, in which
the first coating layer contains an oxide solid electrolyte, and
the second coating layer contains Li, Ti, M, and F, where M is at least one element selected from the group consisting of Ca, Mg, Al, Y, and Zr.

The coated positive electrode active material according to the first aspect can reduce the output resistance of a battery.

In a second aspect of the present disclosure, the coated positive electrode active material according to the first aspect may be one in which, for example, a volume ratio of the second coating layer to the positive electrode active material is greater than or equal to 0.1% and less than or equal to 5%.

The coated positive electrode active material according to the second aspect can further reduce the output resistance of a battery.

In a third aspect of the present disclosure, the coated positive electrode active material according to the first or second aspect may be one in which, for example, M is Al.

The coated positive electrode active material according to the third aspect can further reduce the output resistance of a battery.

In a fourth aspect of the present disclosure, the coated positive electrode active material according to the third aspect may be one in which, for example, a material that forms the second coating layer is represented by composition formula (1) below:

Li_{α}Ti_{β}Al_{γ}F₆ (1)

where α, β, and γ satisfy α + 4β + 3γ = 6 and γ > 0.

The coated positive electrode active material according to the fourth aspect can further reduce the output resistance of a battery.

In a fifth aspect of the present disclosure, the coated positive electrode active material according to the fourth aspect may be one in which, for example, γ satisfies 0.5 ≤ γ < 1.

The coated positive electrode active material according to the fifth aspect can further reduce the output resistance of a battery.

In a sixth aspect of the present disclosure, the coated positive electrode active material according to the fourth aspect may be one in which, for example, α, β, and γ satisfy 2.5 ≤ α ≤ 2.9, 0.1 ≤ β ≤ 0.5, and 0.5 ≤ γ ≤ 0.9.

The coated positive electrode active material according to the sixth aspect can further reduce the output resistance of a battery.

In a seventh aspect of the present disclosure, the coated positive electrode active material according to any one of the first to sixth aspects may be one in which, for example, the oxide solid electrolyte contains at least one selected from the group consisting of lithium niobate, lithium titanate, lithium aluminate, lithium silicate, lithium borate, lithium zirconate, and lithium tungstate.

The coated positive electrode active material according to the seventh aspect can further reduce the output resistance of a battery.

In an eighth aspect of the present disclosure, the coated positive electrode active material according to any one of the first to seventh aspects may be one in which, for example, the oxide solid electrolyte contains lithium niobate.

The coated positive electrode active material according to the eighth aspect can even further reduce the output resistance of a battery.

In a ninth aspect of the present disclosure, the coated positive electrode active material according to any one of the first to eighth aspects may be one in which, for example, the first coating layer has an average thickness of greater than or equal to 1 nm and less than or equal to 50 nm.

The coated positive electrode active material according to the ninth aspect can further reduce the output resistance of a battery.

In a tenth aspect of the present disclosure, the coated positive electrode active material according to any one of the first to ninth aspects may be one in which, for example, the positive electrode active material contains lithium nickel cobalt aluminate.

The coated positive electrode active material according to the tenth aspect can increase an energy density of a battery.

According to an eleventh aspect of the present disclosure, a positive electrode material includes
the coated positive electrode active material according to any one of the first to tenth aspects; and
a first solid electrolyte.

The positive electrode material according to the eleventh aspect enables realization of high ionic conductivity in the positive electrode material.

In a twelfth aspect of the present disclosure, the positive electrode material according to the eleventh aspect may be one in which, for example, the first solid electrolyte includes a halide solid electrolyte.

The positive electrode material according to the twelfth aspect can improve power characteristics of a battery.

In a thirteenth aspect of the present disclosure, the positive electrode material according to the eleventh or twelfth aspect may be one in which, for example, the first solid electrolyte includes a sulfide solid electrolyte.

The positive electrode material according to the thirteenth aspect can further improve the power characteristics of a battery.

According to a fourteenth aspect of the present disclosure, a battery includes
a positive electrode including the positive electrode material according to any one of the eleventh to thirteenth aspects;
a negative electrode; and
an electrolyte layer disposed between the positive electrode and the negative electrode.

The battery according to the fourteenth aspect can have reduced output resistance of the battery.

In a fifteenth aspect of the present disclosure, the battery according to the fourteenth aspect may be one in which, for example, the electrolyte layer contains a second solid electrolyte, and the second solid electrolyte includes a solid electrolyte having the same composition as the solid electrolyte that is present in the first solid electrolyte.

The battery according to the fifteenth aspect can have improved power characteristics of the battery.

In a sixteenth aspect of the present disclosure, the battery according to the fourteenth aspect may be one in which, for example, the electrolyte layer contains a second solid electrolyte, and the second solid electrolyte includes a halide solid electrolyte having a different composition than the solid electrolyte that is present in the first solid electrolyte.

The battery according to the sixteenth aspect can have improved power characteristics of the battery.

In a seventeenth aspect of the present disclosure, the battery according to fourteenth aspect may be one in which, for example, the electrolyte layer contains a second solid electrolyte, and the second solid electrolyte includes a sulfide solid electrolyte.

The battery according to the seventeenth aspect can have improved power characteristics of the battery.

According to an eighteenth aspect of the present disclosure, a method for producing a coated positive electrode active material is a method for producing the coated positive electrode active material according to the first aspect. The method includes processing a mixture with a dry particle-composing method. The mixture includes a material that forms the second coating layer and the positive electrode active material with the at least a portion of a surface coated with the first coating layer. The dry particle-composing method includes applying mechanical energy of impact, compression, and shear to the mixture.

With the production method according to the eighteenth aspect, a positive electrode material that can improve the power characteristics of a battery can be produced.

In a nineteenth aspect of the present disclosure, the method for producing a coated positive electrode active material according to the eighteenth aspect may be one in which, for example, a ratio Da/Dc, which is a ratio of Da to Dc, is greater than or equal to 2, where Da is an average particle diameter of the positive electrode active material with the at least a portion of a surface coated with the first coating layer, and Dc is an average particle diameter of the material that forms the second coating layer.

With the production method according to the nineteenth aspect, a positive electrode material that can further reduce the output resistance of a battery can be produced.

In a twentieth aspect of the present disclosure, the method for producing a positive electrode material according to the nineteenth aspect may be one in which, for example, the ratio Da/Dc is greater than or equal to 5.

With the production method according to the twentieth aspect, a positive electrode material that can even further reduce the output resistance of a battery can be produced.

### (First Embodiment)

### [Coated Positive Electrode Active Material]

According to a first embodiment, a coated positive electrode active material 130 includes a positive electrode active material 110, a first coating layer 111, and a second coating layer 112. The first coating layer 111 coats at least a portion of a surface of the positive electrode active material 110. Herein, the positive electrode active material 110 with at least a portion of a surface coated with the first coating layer 111 is defined as a fundamental active material 120. The second coating layer 112 coats at least a portion of a surface of the fundamental active material 120 that includes the first coating layer 111 and the positive electrode active material 110. The first coating layer 111 contains an oxide solid electrolyte. The second coating layer 112 contains lithium (or Li), titanium (or Ti), M, and fluorine (or F). M is at least one element selected from the group consisting of Ca, Mg, Al, Y, and Zr. M may be aluminum (or Al).

The first coating layer 111 is in direct contact with the positive electrode active material 110. The second coating layer 112 may be in direct contact with the first coating layer 111 and/or in direct contact with the positive electrode active material 110.

In the following descriptions, the material that forms the first coating layer 111 will be referred to as a "first coating material", and the material that forms the second coating layer 112 will be referred to as a "second coating material". According to the first embodiment, the coated positive electrode active material 130 includes the positive electrode active material 110, the first coating material, and the second coating material. The second coating material is present on at least a portion of the surface of the fundamental active material 120 and, accordingly, forms the second coating layer 112.

The coating of the positive electrode active material 110 with the first coating layer 111 and the second coating layer 112 inhibits the formation of an oxide film due to oxidative decomposition of another solid electrolyte (e.g., a first solid electrolyte 100, which will be described later) during the charging of a battery. Accordingly, with the configuration described above, the coated positive electrode active material 130 of the first embodiment can reduce the output resistance of a battery.

### (Second Coating Layer 112)

In the first embodiment, the second coating material may be made of Li, Ti, Al, and F. The expression "be made of Li, Ti, Al, and F" means that materials other than Li, Ti, Al, or F are not intentionally added and that incidental impurities may be present.

In the first embodiment, the second coating material may be represented by composition formula (1) below.

Li_{α}Ti_{β}Al_{γ}F₆ (1)

In the formula, α, β, and γ satisfy α + 4β + 3γ = 6 and γ > 0.

With this configuration, the second coating material can have improved ionic conductivity. Accordingly, a positive electrode material that includes the second coating material represented by composition formula (1) can further reduce the output resistance of a battery.

The second coating material may be free of sulfur.

In composition formula (1), γ may satisfy 0.5 ≤ γ <1.

With any of these configurations, the second coating material can have further improved ionic conductivity. Accordingly, the output resistance of a battery can be further reduced.

In composition formula (1), α, β, and γ may satisfy 2.5 ≤ α ≤ 2.9, 0.1 ≤ β ≤ 0.5, and 0.5 ≤ γ ≤ 0.9.

With this configuration, the second coating material can have further improved ionic conductivity. Accordingly, the output resistance of a battery can be further reduced.

In composition formula (1), α, β, and γ may satisfy α = 2.7, β = 0.3, and γ = 0.7.

With this configuration, the second coating material can have further improved ionic conductivity. Accordingly, the output resistance of a battery can be further reduced.

In the present disclosure, the second coating material is not limited to materials that exactly satisfy composition formula (1), that is, the second coating material may be a material that contains trace amounts of impurities, in addition to the constituent elements shown in composition formula (1). For example, the second coating material may contain impurities in an amount less than or equal to 10 mass%, in addition to the constituent elements shown in the composition formula.

In the coated positive electrode active material 130 of the first embodiment, a volume ratio of the second coating layer 112 to the positive electrode active material 110 may be greater than or equal to 0.1% and less than or equal to 5%. In other words, a ratio V2/V1, which is a ratio of V2 to V1, where V2 is a volume of the second coating layer 112, and V1 is a volume of the positive electrode active material 110, may be within a range of greater than or equal to 0.001 and less than or equal to 0.05. When the volume ratio of the second coating layer 112 to the positive electrode active material 110 is greater than or equal to 0.1%, the second coating material can sufficiently coat the surface of the fundamental active material 120, and, consequently, the formation of a resistive layer between the second coating layer 112 and the positive electrode active material 110 and/or the first coating layer 111 can be effectively inhibited. When the volume ratio of the second coating layer 112 to the positive electrode active material 110 is less than or equal to 5%, excessive coating of the surface of the fundamental active material 120 with the second coating material can be avoided. As a result, an electron conduction path between particles of the positive electrode active material 110 is appropriately ensured. Note that the volume V1 of the positive electrode active material 110 is a total volume of the positive electrode active material 110 in the particles of the coated positive electrode active material 130. The volume V2 of the second coating layer 112 is a total volume of the second coating layer 112 in the particles of the coated positive electrode active material 130.

With the configuration described above, the output resistance of a battery can be further reduced.

In the coated positive electrode active material 130 of the first embodiment, the volume ratio of the second coating layer 112 to the positive electrode active material 110 may be greater than or equal to 0.1% and less than or equal to 4%, or greater than or equal to 0.1% and less than or equal to 3%. When the volume ratio of the second coating layer 112 to the positive electrode active material 110 is within such a range, the output resistance of a battery can be even further reduced.

The volume ratio of the first coating layer 111 or the second coating layer 112 to the positive electrode active material 110 can be determined, for example, as follows. In cross-sectional SEM images of the coated positive electrode active material 130 obtained with a scanning electron microscope (SEM), 20 particles are randomly selected, the volume ratio is determined for each of the particles, and an average of the volume ratios is calculated. The volume of the positive electrode active material 110 may be defined as V1, and the volume of the fundamental active material 120 may be defined as V2. In this case, the ratio of the volume (V2 - V1) of the first coating layer 111 to the volume V1 of the positive electrode active material 110 can be determined by (V2 - V1)/V1. The volume of the coated positive electrode active material 130 may be designated as V3. In this case, the ratio of the volume (V3 - V2) of the second coating layer 112 to the volume V1 of the positive electrode active material 110 can be determined by (V3 - V2)/V1.

The volume V1 of the positive electrode active material 110 can be calculated in the following manner. An area of the positive electrode active material 110 is calculated from a contour of the positive electrode active material 110 extracted from a cross-sectional SEM image. A radius (an equivalent circular radius) r1, which is a radius of a circle having an area equal to the calculated area, is calculated. By assuming that the positive electrode active material 110 is a sphere having the equivalent circular radius r1, the volume V1 of the positive electrode active material 110 can be calculated from the equivalent circular radius r1. The volume of the first coating layer 111 can be calculated as a value (V2 - V1) obtained by subtracting the volume V1 of the positive electrode active material 110 from the volume V2 of the fundamental active material 120. The volume V2 of the fundamental active material 120 can be calculated in the following manner. An average thickness of the first coating layer 111 is added to the equivalent circular radius r1 of the positive electrode active material 110 calculated from the cross-sectional SEM image. The sum is taken as an equivalent circular radius r2 of the fundamental active material 120. By assuming that the fundamental active material 120 is a sphere having the equivalent circular radius r2, the volume V2 of the fundamental active material 120 can be calculated from the equivalent circular radius r2. The volume of the second coating layer 112 can be calculated as a value (V3 - V2) obtained by subtracting the volume V2 of the fundamental active material 120 from the volume V3 of the coated positive electrode active material 130. The volume V3 of the coated positive electrode active material 130 can be calculated in the following manner. The average thickness of the first coating layer 111 and an average thickness of the second coating layer 112 are added to the equivalent circular radius r1 of the positive electrode active material 110 calculated from the cross-sectional SEM image. The sum is taken as an equivalent circular radius r3 of the coated positive electrode active material 130. By assuming that the coated positive electrode active material 130 is a sphere having the equivalent circular radius r3, the volume V3 of the coated positive electrode active material 130 can be calculated from the equivalent circular radius r3.

The average thicknesses of the first coating layer 111 and the second coating layer 112 may be measured with any method. The average thicknesses of the coating layers can be determined, for example, by measuring a thickness of the coating layers at randomly selected 20 points in cross-sectional SEM images of the coated positive electrode active material 130 and calculating an average of the measured values.

The average thickness of the second coating layer 112 may be greater than or equal to 1 nm and less than or equal to 50 nm, or greater than or equal to 5 nm and less than or equal to 30 nm. When the average thickness of the second coating layer 112 is greater than or equal to 1 nm, the surface of the fundamental active material 120 can be sufficiently coated with the second coating material, and, consequently, the formation of a resistive layer between the second coating layer 112 and the positive electrode active material 110 and/or the first coating layer 111 can be efficiently inhibited. When the average thickness of the second coating layer 112 is less than or equal to 50 nm, excessive coating of the surface of the fundamental active material 120 with the second coating material can be avoided. As a result, an electron conduction path between particles of the positive electrode active material 110 is appropriately ensured.

With the configuration described above, the output resistance of a battery can be further reduced.

### <Method for Producing Second Coating Material>

The second coating material of the first embodiment can be produced, for example, with the method described below.

Raw material powders are prepared such that a compounding ratio corresponding to the desired composition can be achieved. For example, in instances where Li_{2.7}Al_{0.7}Ti_{0.3}F₆ is to be produced, LiF, AlF₃, and TiF₄ are prepared in a molar ratio of 2.7:0.7:0.3. The values of α, β, and γ in composition formula (1) can be adjusted by adjusting the raw materials, the compounding ratio, and a synthesis process.

The raw material powders are thoroughly mixed, and subsequently, the raw materials are mixed, milled, and reacted together, with a mechanochemical milling method. Alternatively, after the raw material powders were thoroughly mixed, the raw material powders may be heat-treated in a vacuum or in an inert atmosphere. Conditions for the heat treatment include performing the heat treatment within a range of 100°C to 800°C for 1 hour or more, for example. In this manner, a second coating material having the above-mentioned composition can be obtained.

Note that the constitution of the crystalline phase (crystal structure) of the second coating material can be determined according to the adjustment of the method with which the raw material powders are reacted together and the conditions for the reaction.

### (First Coating Layer 111)

In the first embodiment, the first coating material may be made of an oxide solid electrolyte. The expression "be made of an oxide solid electrolyte" means that materials other than oxide solid electrolytes are not intentionally added and that incidental impurities may be present.

In the first embodiment, the oxide solid electrolyte includes at least one selected from the group consisting of lithium niobate, lithium titanate, lithium aluminate, lithium silicate, lithium borate, lithium zirconate, and lithium tungstate.

With this configuration, the formation of a resistive layer between the positive electrode active material 110 and the first coating layer 111 can be inhibited to a greater degree. As a result, the output resistance of a battery can be further reduced.

It is advantageous that the oxide solid electrolyte contain lithium niobate.

With this configuration, the output resistance of a battery can be even further reduced.

The oxide solid electrolyte may be at least one selected from the group consisting of lithium niobate, lithium titanate, lithium aluminate, lithium silicate, lithium borate, lithium zirconate, and lithium tungstate. The oxide solid electrolyte may be lithium niobate. That is, the oxide solid electrolyte may be made of lithium niobate. The expression "be made of lithium niobate" means that materials other than lithium niobate are not intentionally added and that incidental impurities may be present.

With the configuration described above, the output resistance of a battery can be even further reduced.

The volume ratio of the first coating layer 111 to the positive electrode active material 110 may be greater than or equal to 0.1% and less than or equal to 5%. When the volume ratio of the first coating layer 111 to the positive electrode active material 110 is greater than or equal to 0.1%, the first coating material can sufficiently coat the surface of the positive electrode active material 110, and, consequently, the formation of a resistive layer between the positive electrode active material 110 and the first coating layer 111 can be efficiently inhibited. When the volume ratio of the first coating layer 111 to the positive electrode active material 110 is less than or equal to 5%, excessive coating of the surface of the positive electrode active material 110 with the first coating layer material can be avoided. As a result, an electron conduction path between particles of the positive electrode active material 110 is appropriately ensured.

With the configuration described above, the output resistance of a battery can be further reduced.

The average thickness of the first coating layer 111 may be greater than or equal to 1 nm and less than or equal to 50 nm, or greater than or equal to 5 nm and less than or equal to 30 nm. When the average thickness of the first coating layer 111 is greater than or equal to 1 nm, the surface of the positive electrode active material 110 can be sufficiently coated with the first coating material, and, consequently, the formation of a resistive layer between the positive electrode active material 110 and the first coating layer 111 can be efficiently inhibited. When the average thickness of the first coating layer 111 is less than or equal to 50 nm, excessive coating of the surface of the positive electrode active material 110 with the first coating layer material can be avoided. As a result, an electron conduction path between particles of the positive electrode active material 110 is appropriately ensured.

With the configuration described above, the output resistance of a battery can be further reduced.

The thickness of the first coating layer 111 can be measured with the same method as that described for the second coating layer 112.

### (Positive Electrode Active Material 110)

The positive electrode active material 110 is, for example, a material that has a property of occluding and releasing metal ions (e.g., lithium ions). Examples of the positive electrode active material 110 include lithium transition metal oxides, transition metal fluorides, polyanionic materials, fluorinated polyanionic materials, transition metal sulfides, transition metal oxysulfides, and transition metal oxynitrides. Examples of the lithium transition metal oxides include Li(Ni, Co, Al)O₂, Li(Ni, Co, Mn)O₂, and LiCoO₂. In instances where a lithium transition metal oxide, for example, is used as the positive electrode active material 110, the cost of production of the positive electrode can be reduced, and an average discharge voltage can be increased.

The positive electrode active material 110 has a shape that is a particle shape, for example.

The positive electrode active material 110 may contain lithium nickel cobalt aluminate.

With any of these configurations, an energy density of a battery can be increased.

The positive electrode active material 110 may be Li(Ni, Co, Al)O₂.

### <Method for Producing Fundamental Active Material 120>

The positive electrode active material 110 having at least a portion of a surface coated with the first coating layer 111, which is namely the fundamental active material 120, can be produced, for example, with the method described below.

Methods that can be used to coat at least a portion of the surface of the positive electrode active material 110 with an oxide solid electrolyte that serves as the first coating material include liquid-phase coating methods and vapor-phase coating methods.

The liquid-phase coating methods are carried out, for example, as follows. A precursor solution for the oxide solid electrolyte is applied to the surface of the positive electrode active material 110. For example, in instances where the oxide solid electrolyte to be coated is LiNbO₃, the precursor solution may be, for instance, a mixed solution of a solvent, lithium alkoxide and niobium alkoxide. Examples of the lithium alkoxide include lithium ethoxide. Examples of the niobium alkoxide include niobium ethoxide. The solvent is, for example, an alcohol, such as ethanol. Amounts of the lithium alkoxide and the niobium alkoxide are adjusted such that a desired composition of the oxide solid electrolyte can be achieved. The precursor solution may be acidic or alkaline.

The precursor solution may be applied to the surface of the positive electrode active material 110 with any method. For example, the precursor solution can be applied to the surface of the positive electrode active material 110 in a tumbling fluidized bed coating machine. The tumbling fluidized bed coating machine can apply the precursor solution to the surface of the positive electrode active material 110 by spraying the precursor solution onto the positive electrode active material 110 while tumbling and fluidizing the positive electrode active material 110. Accordingly, a precursor coating is formed on the surface of the positive electrode active material 110. Subsequently, the positive electrode active material 110 coated with the precursor coating is heat-treated. The heat treatment causes the gelation of the precursor coating to proceed, thereby enabling at least a portion of the surface of the positive electrode active material 110 to be coated with the oxide solid electrolyte. Accordingly, the fundamental active material 120 is formed.

Examples of the vapor-phase coating methods include pulsed laser deposition methods, vacuum vapor deposition methods, sputtering methods, thermal chemical vapor deposition methods, and plasma chemical vapor deposition methods. The pulsed laser deposition methods are carried out, for example, as follows. A high-energy pulsed laser (e.g., a KrF excimer laser, wavelength: 248 nm) is applied onto an oxide solid electrolyte used as a target, to cause the sublimed oxide solid electrolyte to be deposited onto the surface of the positive electrode active material. In instances where the oxide solid electrolyte to be coated is LiNbO₃, the target to be used is densely sintered LiNbO₃.

The average thickness of the coating of the oxide solid electrolyte formed on the surface of the positive electrode active material 110 can be determined, for example, as follows. In cross-sectional SEM images of the fundamental active material 120, 20 particles of the fundamental active material 120 are randomly selected, the thickness of the coating of the oxide solid electrolyte thereof is measured, and an average of the measured values is calculated.

### <Method for Producing Coated Positive Electrode Active Material 130>

The coated positive electrode active material 130 can be produced, for example, with the method described below.

The coated positive electrode active material 130 can be produced by treating a mixture containing the fundamental active material 120 and the second coating material, by using a dry particle-composing method. The dry particle-composing method may be a method in which the fundamental active material 120 and the second coating material are mixed together in an appropriate compounding ratio, and the mixture is stirred with mechanical energy of impact, compression, and shear applied thereto.

Regarding a machine that can be used in the process of producing the coated positive electrode active material 130, any machine that can apply mechanical energy of impact, compression, shear, and the like to the mixture may be employed. Desirably, the machine may be a compression-shear processing machine (particle-composing machine), such as a ball mill, a mechanofusion system (manufactured by Hosokawa Micron Corporation), or a Nobilta (manufactured by Hosokawa Micron Corporation). Among these, a mechanofusion system and a Nobilta are more desirable, and a Nobilta is even more desirable.

The mechanofusion system is a particle-composing machine that uses a dry mechanical composing technique, which involves applying high mechanical energy to several different material particles. In the mechanofusion system, the loaded raw powder material is subjected to mechanical energy of compression, shear, friction, and the like between a rotating vessel and a press head, and, accordingly, the particles form a composite.

The Nobilta is a particle-composing machine that uses a dry mechanical composing technique that has evolved from a particle-composing technique, to carry out the composing of nanoparticles used as a starting raw material. The technique is for producing composite particles by applying mechanical energy of impact, compression, and shear to several raw material powders.

The Nobilta includes a horizontal cylindrical mixing vessel, in which a rotor is positioned with a predetermined gap between the rotor and an inner wall of the mixing vessel; with high-speed rotation of the rotor, the raw material particles are forcibly passed through the gap, and this process is repeated multiple times, to cause the force of impact, compression, and shear to act on the mixture; and, accordingly, composite particles of the positive electrode active material and the coating material can be produced. Conditions, such as a rotation speed of the rotor, a process time, and amounts of charge, may be appropriately adjusted.

In the process of producing the coated positive electrode active material 130, a ratio Da/Dc, which is a ratio of Da to Dc, may be greater than or equal to 2, where Da is an average particle diameter of the fundamental active material 120, and Dc is an average particle diameter of the second coating material. With this configuration, the second coating material can easily be densely coated onto the surface of the fundamental active material 120, and, consequently, the formation of a resistive layer on an interface between the positive electrode active material 110 and the coating layer can be effectively inhibited. As a result, the output resistance of a battery can be further reduced.

The average particle diameters of the positive electrode active material 110, the fundamental active material 120, and the coated positive electrode active material 130 can be measured, for example, by using SEM images. Specifically, for each of the active materials, an average of equivalent circular diameters of randomly selected 50 particles of the active material can be calculated from SEM images, to determine the average particle diameter.

In the process of producing the coated positive electrode active material 130, the ratio Da/Dc may be greater than or equal to 5. With this configuration, the second coating material can easily be more densely coated onto the surface of the fundamental active material 120, and, consequently, the formation of a resistive layer in a battery can be more efficiently inhibited. As a result, the output resistance of a battery can be even further reduced.

### [Positive Electrode Material]

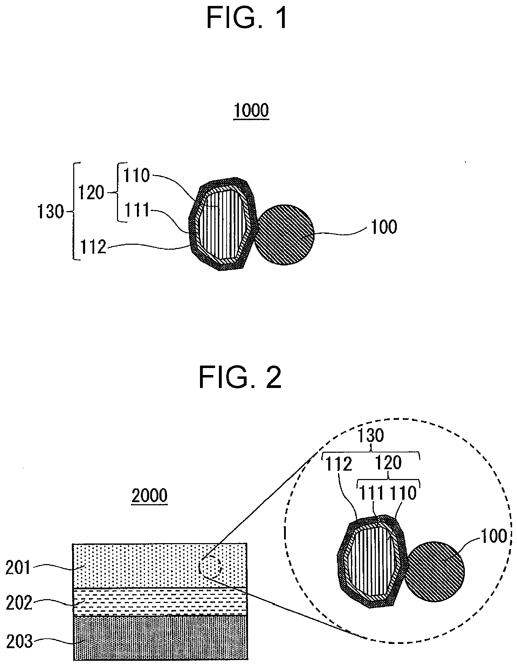

Fig. 1 is a cross-sectional view illustrating a schematic configuration of a positive electrode material 1000 of the first embodiment.

The positive electrode material 1000 of the first embodiment includes the coated positive electrode active material 130 of the first embodiment and the first solid electrolyte 100. The first solid electrolyte 100 has a shape that is a particle shape, for example. The first solid electrolyte 100 enables realization of high ionic conductivity in the positive electrode material 1000.

### (First Solid Electrolyte 100)

The first solid electrolyte 100 includes a solid electrolyte having high ionic conductivity. The first solid electrolyte 100 may include a halide solid electrolyte. Halide solid electrolytes have high ionic conductivity and excellent high-potential stability. In addition, because of their low electron conductivity and high oxidation resistance, halide solid electrolytes are unlikely to undergo oxidative decomposition when they come into contact with the coated positive electrode active material 130. Accordingly, in the instance where the first solid electrolyte 100 includes a halide solid electrolyte, the power characteristics of a battery can be improved.

Examples of the halide solid electrolyte include Li₃(Ca,Y,Gd)X₆, Li₂MgX₄, Li₂FeX₄, Li(Al,Ga,In)X₄, Li₃(Al,Ga,In)X₆, and LiI. In these halide solid electrolytes, the element X is at least one selected from the group consisting of Cl, Br, and I. In the present disclosure, regarding the elements in formulae, expressions such as "(Al, Ga, In)" mean at least one element selected from the group of the elements in the parenthesis. That is, "(Al, Ga, In)" has the same meaning as "at least one selected from the group consisting of Al, Ga, and In". The same applies to other elements.

The halide solid electrolytes may be free of sulfur.

The first solid electrolyte 100 may include a sulfide solid electrolyte. With this configuration, the power characteristics of a battery can be improved.

Examples of the sulfide solid electrolyte include Li₂S-P₂S₅, Li₂S-SiS₂, Li₂S-B₂S₃, Li₂S-GeS₂, Li_{3.25}Ge_{0.25}P_{0.75}S₄, and Li₁₀GeP₂S₁₂. To any of these, LiX, Li₂O, MO_{q}, LiₚMO_{q}, and/or the like may be added. In the LiX, the element X is at least one element selected from the group consisting of F, Cl, Br, and I. In the MO_{q} and LiₚMO_{q}, the element M is at least one element selected from the group consisting of P, Si, Ge, B, Al, Ga, In, Fe, and Zn. In the MO_{q} and LiₚMO_{q}, p and q are each independently a natural number.

The first solid electrolyte 100 may be a sulfide solid electrolyte. That is, the first solid electrolyte 100 may be made of a sulfide solid electrolyte. The expression "be made of a sulfide solid electrolyte" means that materials other than sulfide solid electrolytes are not intentionally added and that incidental impurities may be present. For example, the sulfide solid electrolyte may contain lithium sulfide and phosphorus sulfide. For example, the sulfide solid electrolyte may be Li₂S-P₂S₅.

The first solid electrolyte 100 may have any shape, and examples of the shape include needle shapes, spherical shapes, and ellipsoidal shapes. For example, the shape of the first solid electrolyte 100 may be a particle.

When the shape of the first solid electrolyte 100 is a particle shape (e.g., a spherical shape), the average particle diameter may be less than or equal to 100 µm. If the average particle diameter is greater than 100 µm, the coated positive electrode active material 130 and the first solid electrolyte 100 may not be able to form a favorable state of dispersion in the positive electrode material 1000. Consequently, charge-discharge characteristics are degraded. The average particle diameter of the first solid electrolyte 100 may be less than or equal to 10 µm. When the average particle diameter of the first solid electrolyte 100 is within the mentioned range, the coated positive electrode active material 130 and the first solid electrolyte 100 can form a favorable state of dispersion in the positive electrode material 1000.

The average particle diameter of the first solid electrolyte 100 may be less than the average particle diameter of the coated positive electrode active material 130. With this configuration, the coated positive electrode active material 130 and the first solid electrolyte 100 can form a more favorable state of dispersion in the electrode.

The average particle diameter of the coated positive electrode active material 130 may be greater than or equal to 0.1 µm and less than or equal to 100 µm. When the average particle diameter of the coated positive electrode active material 130 is greater than or equal to 0.1 µm, the coated positive electrode active material 130 and the first solid electrolyte 100 can form a favorable state of dispersion in the positive electrode material 1000. As a result, the charge-discharge characteristics of a battery are improved. Furthermore, when the average particle diameter of the coated positive electrode active material 130 is less than or equal to 100 µm, a lithium diffusion rate in the positive electrode active material is improved. Accordingly, a high-power operation of a battery is realized.

The average particle diameter of the coated positive electrode active material 130 may be greater than the average particle diameter of the first solid electrolyte 100. Even with this configuration, the coated positive electrode active material 130 and the first solid electrolyte 100 can form a favorable state of dispersion in the electrode.

As illustrated in Fig. 1, the first solid electrolyte 100 and the coated positive electrode active material 130 may be in contact with each other in the positive electrode material 1000.

In the coated positive electrode active material 130, the first coating layer 111 may uniformly coat the positive electrode active material 110. In other words, the fundamental active material 120 may be formed of the positive electrode active material 110 with the surface thereof entirely coated with the first coating layer 111. The first coating layer 111 inhibits direct contact between the positive electrode active material 110 and the first solid electrolyte 100, thereby inhibiting the formation of an oxide film due to oxidative decomposition of the first solid electrolyte 100. Accordingly, with the configuration described above, the output resistance of a battery is further reduced.

In the coated positive electrode active material 130, the first coating layer 111 may coat only a portion of the surface of the positive electrode active material 110. In other words, the fundamental active material 120 may be formed of the positive electrode active material 110 with a portion of the surface thereof coated with the first coating layer 111.

In the coated positive electrode active material 130, the second coating layer 112 may uniformly coat the fundamental active material 120. In other words, the coated positive electrode active material 130 may be formed of the fundamental active material 120 with the surface thereof entirely coated with the second coating layer 112. The second coating layer 112 inhibits direct contact between the fundamental active material 120 and the first solid electrolyte 100, thereby inhibiting the formation of an oxide film due to oxidative decomposition of the first solid electrolyte 100. Accordingly, with the configuration described above, the output resistance of a battery is further reduced.

In the coated positive electrode active material 130, the second coating layer 112 may coat only a portion of the surface of the fundamental active material 120. In other words, the coated positive electrode active material 130 may be formed of the fundamental active material 120 with a portion of the surface thereof coated with the second coating layer 112.

The positive electrode material 1000 may contain a plurality of the first solid electrolytes 100 and a plurality of the coated positive electrode active materials 130.

A content of the first solid electrolyte 100 in the positive electrode material 1000 may or may not be equal to a content of the coated positive electrode active material 130 in the positive electrode material 1000.

### <Method for Producing Positive Electrode Material 1000>

The positive electrode material 1000 can be prepared by mixing the coated positive electrode active material 130 with the first solid electrolyte 100. The mixing of the coated positive electrode active material 130 with the first solid electrolyte 100 can be carried out with any method. For example, the coated positive electrode active material 130 may be mixed with the first solid electrolyte 100 in a device, such as a mortar, or the coated positive electrode active material 130 may be mixed with the first solid electrolyte 100 in a mixer, such as a ball mill. The coated positive electrode active material 130 and the first solid electrolyte 100 may be mixed together at any mixing ratio.

### (Second Embodiment)

Now, a second embodiment will be described. Descriptions that are the same as those in the first embodiment will be omitted where appropriate.

Fig. 2 is a cross-sectional view illustrating a schematic configuration of a battery 2000 of the second embodiment.

According to the second embodiment, the battery 2000 includes a positive electrode 201, an electrolyte layer 202, and a negative electrode 203. The electrolyte layer 202 is disposed between the positive electrode 201 and the negative electrode 203.

The positive electrode 201 includes the positive electrode material 1000 of the first embodiment. That is, the positive electrode 201 includes the coated positive electrode active material 130 and the first solid electrolyte 100. The positive electrode 201 includes a material that has a property of occluding and releasing metal ions (e.g., lithium ions).

With this configuration, the battery 2000 can have improved charge-discharge efficiency.

Regarding a volume ratio v1:100 - v1, 30 ≤ v1 ≤ 95 may be satisfied, where v1:100 - v1 is a volume ratio between the positive electrode active material 110 and a total of the first coating material, the second coating material, and the first solid electrolyte 100 in the positive electrode 201. Here, v1 is a volume fraction of the positive electrode active material 110 relative to a total volume of the positive electrode active material 110, the first coating material, the second coating material, and the first solid electrolyte 100 in the positive electrode 201, with the total volume being taken as 100. When 30 ≤ v1 is satisfied, a sufficient energy density of the battery 2000 can be easily ensured. When v1 ≤ 95 is satisfied, a high-power operation of the battery 2000 is further facilitated.

The positive electrode 201 may have a thickness of greater than or equal to 10 µm and less than or equal to 500 µm. When the thickness of the positive electrode 201 is greater than or equal to 10 µm, the energy density of the battery 2000 is sufficiently ensured. When the thickness of the positive electrode 201 is less than or equal to 500 µm, a high-power operation is realized.

The electrolyte layer 202 is a layer containing an electrolyte. The electrolyte is, for example, a solid electrolyte. The solid electrolyte that is present in the electrolyte layer 202 is referred to as a second solid electrolyte. That is, the electrolyte layer 202 may contain a second solid electrolyte layer.

The second solid electrolyte may be a halide solid electrolyte, a sulfide solid electrolyte, an oxide solid electrolyte, a polymer solid electrolyte, or a complex hydride solid electrolyte.

The second solid electrolyte may include a solid electrolyte having the same composition as the solid electrolyte that is present in the first solid electrolyte 100.

In instances where the second solid electrolyte includes a halide solid electrolyte, the second solid electrolyte may include a halide solid electrolyte having the same composition as a halide solid electrolyte that is present in the first solid electrolyte 100 of the first embodiment. That is, the electrolyte layer 202 may contain a halide solid electrolyte having the same composition as a halide solid electrolyte that is present in the first solid electrolyte 100 of the first embodiment described above. With this configuration, the battery can have further improved power characteristics.

The second solid electrolyte may include a solid electrolyte having a different composition than the solid electrolyte that is present in the first solid electrolyte 100.

In instances where the second solid electrolyte includes a halide solid electrolyte, the second solid electrolyte may include a halide solid electrolyte having a different composition than a halide solid electrolyte that is present in the first solid electrolyte 100 of the first embodiment. That is, the electrolyte layer 202 may contain a halide solid electrolyte having a different composition than a halide solid electrolyte that is present in the first solid electrolyte 100 of the first embodiment. With this configuration, the battery can have further improved power characteristics.

The second solid electrolyte may include a sulfide solid electrolyte. The second solid electrolyte may include a sulfide solid electrolyte having the same composition as a sulfide solid electrolyte that is present in the first solid electrolyte 100 of the first embodiment. That is, the electrolyte layer 202 may contain a sulfide solid electrolyte having the same composition as a sulfide solid electrolyte that is present in the first solid electrolyte 100 of the first embodiment.

With this configuration, since the electrolyte layer 202 contains a sulfide solid electrolyte, which has excellent reduction stability, it is possible to use a low-potential negative electrode material, such as graphite or lithium metal, in the negative electrode 203. Consequently, the battery can have an improved energy density. Furthermore, in instances where the electrolyte layer 202 contains a sulfide solid electrolyte having the same composition as a sulfide solid electrolyte that is present in the first solid electrolyte 100 of the first embodiment, the battery can have further improved power characteristics.

The second solid electrolyte may include an oxide solid electrolyte. Examples of the oxide solid electrolyte include NASICON-type solid electrolyte materials, typified by LiTi₂(PO₄)₃ and element-substituted derivatives thereof; (LaLi)TiO₃-system perovskite-type solid electrolyte materials; LISICON-type solid electrolyte materials, typified by Li₁₄ZnGe₄O₁₆, Li₄SiO₄, LiGeO₄, and element-substituted derivatives thereof; garnet-type solid electrolyte materials, typified by Li₇La₃Zr₂O₁₂ and element-substituted derivatives thereof; Li₃PO₄ and N-substituted derivatives thereof; glass that is based on a Li-B-O compound such as LiBO₂ or Li₃BO₃ and which contains Li₂SO₄, Li₂CO₃, or the like added thereto; and glass-ceramics.

The second solid electrolyte may include a polymer solid electrolyte. Examples of the polymer solid electrolyte include a compound of a polymeric compound and a lithium salt. The polymeric compound may have an ethylene oxide structure. Polymeric compounds having an ethylene oxide structure can contain large amounts of a lithium salt. Consequently, the ionic conductivity can be further increased. Examples of the lithium salt include LiPF₆, LiBF₄, LiSbF₆, LiAsF₆, LiSO₃CF₃, LiN(SO₂F)₂, LiN(SO₂CF₃)₂, LiN(SO₂C₂F₅)₂, LiN(SO₂CF₃)(SO₂C₄F₉), and LiC(SO₂CF₃)₃. One lithium salt may be used alone, or two or more lithium salts may be used in combination.

The second solid electrolyte may include a complex hydride solid electrolyte. Examples of the complex hydride solid electrolyte include LiBH₄-LiI and LiBH₄-P₂S₅.

The electrolyte layer 202 may contain the second solid electrolyte as a major component. Specifically, the second solid electrolyte may be present in the electrolyte layer 202 in a mass percentage of greater than or equal to 50% (i.e., greater than or equal to 50 mass%) relative to a total mass of the electrolyte layer 202.

With this configuration, the battery can have further improved power characteristics.

The second solid electrolyte may be present in the electrolyte layer 202 in a mass percentage of greater than or equal to 70% (i.e., greater than or equal to 70 mass%) relative to the total mass of the electrolyte layer 202.

With this configuration, the battery can have even further improved power characteristics.

The electrolyte layer 202 may contain the second solid electrolyte as a major component and may further contain incidental impurities or starting materials used in the synthesis of the second solid electrolyte, one or more by-products, one or more decomposition products, and the like.

The second solid electrolyte may be present in the electrolyte layer 202 in a mass percentage of 100% (i.e., 100 mass%) relative to the total mass of the electrolyte layer 202, provided that impurities that are inevitably incorporated are not taken into account. That is, the electrolyte layer 202 may be made of the second solid electrolyte.

With this configuration, the battery can have further improved power characteristics.

The second solid electrolyte that may be present in the electrolyte layer 202 may be two or more of the materials that are mentioned above as solid electrolyte materials. For example, the second solid electrolyte that may be present in the electrolyte layer 202 may be a halide solid electrolyte and sulfide solid electrolyte.

The electrolyte layer 202 may have a thickness of greater than or equal to 1 µm and less than or equal to 300 µm. When the thickness of the electrolyte layer 202 is greater than or equal to 1 µm, short-circuiting between the positive electrode 201 and the negative electrode 203 is unlikely to occur. Furthermore, when the thickness of the electrolyte layer 202 is less than or equal to 300 µm, a high-power operation is facilitated. That is, by appropriately adjusting the thickness of the electrolyte layer 202, safety of the battery can be sufficiently ensured, and the battery can be operated at high power.

The negative electrode 203 includes a material that has a property of occluding and releasing metal ions (e.g., lithium ions). The negative electrode 203 includes, for example, a negative electrode active material (e.g., negative electrode active material particles).

Examples of the negative electrode active material include metal materials, carbon materials, oxides, nitrides, tin compounds, and silicon compounds. The metal materials may each be a single metal. The metal materials may each be an alloy. Examples of the metal materials include lithium metals and lithium alloys. Examples of the carbon materials include natural graphite, coke, partially graphitized carbon, carbon fibers, spherical carbon, artificial graphite, and amorphous carbon. Silicon, tin, a silicon compound, or a tin compound may be used; these are suitable from the standpoint of a capacity density.

The negative electrode 203 may include a third solid electrolyte. With this configuration, a lithium ion conductivity in the negative electrode 203 is improved, which enables a high-power operation. The third solid electrolyte that is included in the negative electrode 203 may be one or more of the materials mentioned above as examples of the second solid electrolyte of the electrolyte layer 202.

The negative electrode active material may have an average particle diameter greater than an average particle diameter of the third solid electrolyte that is included in the negative electrode 203. Consequently, the negative electrode active material and the third solid electrolyte can form a favorable state of dispersion.

Regarding a volume ratio v2: 100 - v2, 30 ≤ v2 ≤ 95 may be satisfied, where v2: 100 - v2 is a volume ratio between the negative electrode active material and the third solid electrolyte in the negative electrode 203. Here, v2 is a volume ratio of the negative electrode active material relative to a total volume of the negative electrode active material and the third solid electrolyte in the negative electrode 203, with the total volume being taken as 100. When 30 ≤ v2 is satisfied, a sufficient energy density of the battery can be easily ensured. When v2 ≤ 95 is satisfied, a high-power operation of the battery is further facilitated.

The negative electrode 203 may have a thickness of greater than or equal to 10 µm and less than or equal to 500 µm. When the thickness of the negative electrode 203 is greater than or equal to 10 µm, a sufficient energy density of the battery can be easily ensured. When the thickness of the negative electrode 203 is less than or equal to 500 µm, a high-power operation of the battery is further facilitated.

A binding agent may be included in at least one selected from the group consisting of the positive electrode 201, the electrolyte layer 202, and the negative electrode 203, to improve adhesion between particles. The binding agent is used to improve the binding properties of the materials that form the electrodes. Examples of the binding agent include polyvinylidene fluoride, polytetrafluoroethylene, polyethylene, polypropylene, aramid resins, polyamides, polyimides, polyamide-imides, polyacrylonitrile, polyacrylic acids, poly(methyl acrylate), poly(ethyl acrylate), poly(hexyl acrylate), polymethacrylic acids, poly(methyl methacrylate), poly(ethyl methacrylate), poly(hexyl methacrylate), polyvinyl acetate, polyvinylpyrrolidone, polyethers, polyether sulfones, hexafluoropolypropylene, styrene butadiene rubber, and carboxymethyl cellulose. The binding agent may be a copolymer of two or more materials selected from tetrafluoroethylene, hexafluoroethylene, hexafluoropropylene, perfluoroalkyl vinyl ether, vinylidene fluoride, chlorotrifluoroethylene, ethylene, propylene, pentafluoropropylene, fluoromethyl vinyl ether, acrylic acids, and hexadiene. The binding agent may be a mixture of two or more selected from these materials.

A conductive additive may be included in at least one of the positive electrode 201 and the negative electrode 203 to enhance electron conductivity. Examples of the conductive additive include graphites, such as natural graphite and artificial graphite; carbon blacks, such as acetylene black and Ketjen black; conductive fibers, such as carbon fibers and metal fibers; carbon fluoride; metal powders, such as aluminum powders; conductive whiskers, such as zinc oxide whiskers and potassium titanate whiskers; conductive metal oxides, such as titanium oxide; and conductive polymers, such as polyaniline, polypyrrole, and polythiophene. In instances where a conductive carbon additive is used, a cost reduction can be achieved.

The battery of the second embodiment can be configured as batteries of various shapes, and examples of the shapes include coin shapes, cylindrical shapes, prismatic shapes, sheet shapes, button shapes, flat shapes, and stack shapes.

The battery of the second embodiment can be produced, for example, with the following method. A positive electrode material 1000 according to the first embodiment, one or more materials for forming the electrolyte layer 202, and one or more materials for forming the negative electrode 203 are provided. A multilayer body in which the positive electrode 201, the electrolyte layer 202, and the negative electrode 203 are arranged in this order is prepared with a known method.

### EXAMPLES

Now, details of the present disclosure will be described with reference to Examples, Comparative Examples, and Reference Examples.

### «Examples 1 to 3»

### [Preparation of Second Coating Material]

In an argon atmosphere glove box with a dew point of -60°C or less and an oxygen level of 5 vol-ppm or less, raw material powders of LiF, AlF₃, and TiF₄ were weighed such that a molar ratio of LiF:AlF₃:TiF₄=2.7:0.7:0.3 was achieved. These raw material powders were mixed together in an agate mortar to form a mixture. Next, the resulting mixture was milled in a planetary ball mill (P-7 model, manufactured by Fritsch) under the conditions of 12 hours and 500 rpm. In this manner, a powder of a synthesized product represented by the composition formula of Li_{2.7}Al_{0.7}Ti_{0.3}F₆ (hereinafter denoted as LTAF) was obtained. The powder of the synthesized product and an appropriate amount of a solvent were mixed together, and the mixture was milled in a planetary ball mill (P-7 model, manufactured by Fritsch) at 200 rpm for 20 minutes. Subsequently, the solvent was removed, and the resulting product was dried. In this manner, a powder of LTAF with an average particle diameter of 0.5 µm was obtained as the second coating material. The average particle diameter was determined as follows. The powder of the LTAF was examined with a scanning electron microscope (a 3D real surface view microscope VE-8800, manufactured by Keyence Corporation) at a magnification of 5000×, 50 particles were randomly selected, and an average of equivalent circular diameters thereof was calculated.

### [Positive Electrode Active Material]

The positive electrode active material used was Li(Ni, Co, Al)O₂ (hereinafter denoted as NCA) with an average particle diameter of 5 µm.

### [Preparation of First Coating Material (Oxide Solid Electrolyte)]

The first coating material (oxide solid electrolyte) used was lithium niobate (hereinafter denoted as LiNbOs). Coated NCA, which had the LiNbO₃ coated onto a surface of the NCA, was prepared to serve as the fundamental active material. The coated NCA was prepared with the following procedure.

First, in an argon atmosphere glove box with a dew point of -60°C or less and an oxygen level of 5 vol-ppm or less, lithium ethoxide and niobium pentaethoxide were dissolved in ethanol to form a coating solution.

A tumbling fluidized bed granulating-coating machine was used for the application of the coating onto the surface of the NCA. The prepared coating solution was applied to the surface of the NCA in the tumbling fluidized bed granulating-coating machine. The coating solution was applied in a manner such that an average thickness of the LiNbO₃ could be 15 nm. The processed powder was loaded into an alumina crucible and placed in an air atmosphere. The processed powder was heat-treated in the air atmosphere at 220°C for 1 hour.

The heat-treated powder was reground in an agate mortar. In this manner, the coated NCA, which had the LiNbO₃ coated onto a surface of the NCA, was prepared to serve as the fundamental active material.

The average thickness of the LiNbO₃ coating layer (first coating layer) of the coated NCA was measured with a cross-sectional SEM. The average thickness was 14 nm.

### [Preparation of Coated Positive Electrode Active Material]

The application of the second coating material onto the coated NCA was carried out in a particle-composing machine (Nobilta, NOB-MINI, manufactured by Hosokawa Micron Corporation). The LTAF powder and 49 g of the coated NCA were added into a vessel of the NOB-MINI. The amounts of the LTAF powder were 0.31 g (Example 1), 0.63 g (Example 2), and 0.95 g (Example 3). A composing process was performed on the coated NCA and the LTAF powder at a rotational speed of 6000 rpm, for an operating time of 60 minutes, and at a power level of 550 W to 740 W. In this manner, coated positive electrode active materials were prepared.

In Examples 1 to 3, the volume ratio of the LiNbO₃ coating layer (first coating layer) to the positive electrode active material and the volume ratio of the LTAF coating layer (second coating layer) to the positive electrode active material were calculated from a cross-sectional SEM. In Examples 1 to 3, the volume ratios of the first coating layer to the positive electrode active material were all 1.7%. In Examples 1 to 3, the volume ratios of the second coating layer to the positive electrode active material were 1.2%, 2.0%, and 2.5%, respectively.

### [Preparation of Secondary Battery]

The following steps were performed with the coated positive electrode active materials of Examples 1 to 3, described above.

In an argon atmosphere glove box with a dew point of -60°C or less and an oxygen level of 5 vol-ppm or less, the coated positive electrode active material, which was one of those of Examples 1 to 3, and Li₂S-P₂S₅, which was used as the first solid electrolyte, were weighed such that the volume ratio of the positive electrode active material to the total of the first coating material, the second coating material, and the first solid electrolyte could be 75:25. Furthermore, a conductive additive (VGCF-H, manufactured by Showa Denko K.K.) was weighed such that the conductive additive could be present in an amount of 1.5 mass% relative to the mass of the positive electrode active material. These were mixed together in an agate mortar to form positive electrode materials of Examples 1 to 3. "VGCF-H" is a registered trademark of Showa Denko K.K.

In an insulating cylinder, Li₂S-P₂S₅, which was used as the second solid electrolyte, was added in an amount of 60 mg and pressure-molded at a pressure of 80 MPa. In this manner, the electrolyte layer was prepared. Next, the positive electrode material, which was one of those of Examples 1 to 3, was added in an amount of 15.6 mg in terms of an equivalent amount of the positive electrode active material and pressure-molded at a pressure of 720 MPa. In this manner, a positive electrode layer was prepared. Next, Li metal (thickness: 200 µm) was placed on the electrolyte layer on the counter electrode side. The resultant was pressure-molded at a pressure of 80 MPa. In this manner, a negative electrode layer was prepared. Next, a stainless steel current collector was placed on upper and lower sides of the multilayer body, and a current collector lead was attached to the current collector. Lastly, the interior of the insulating cylinder was blocked and sealed from the ambient environment by means of an insulating ferrule. In this manner, secondary batteries were prepared. The insulating cylinder used in the Examples had an inside diameter of 9.5 mm, and an electrode had a projected area of 0.71 cm².

### (Evaluation of Output Resistance)

An evaluation of the output resistance was performed on each of the secondary batteries of Examples 1 to 3 under the following conditions.

The secondary batteries of Examples 1 to 3 were placed in a constant-temperature chamber at 25°C. The batteries were charged at a constant current of 319 µA, which was a current value corresponding to 0.1 C rate (10 hour rate), which was a rate with respect to a theoretical capacity of the battery, and the charging was terminated at a voltage of 4.3 V (versus a Li/Li⁺ reference). Next, the batteries were charged at a constant voltage of 4.3 V, and the charging was terminated at a current value of less than or equal to 31.9 µA, which corresponded to 0.01 C rate. After resting for 20 minutes, the batteries were discharged at the same constant current of 319 µA, which was a current value corresponding to 0.1 C rate, and the discharging was terminated at a voltage of 3.62 V (versus a Li/Li⁺ reference). Next, the batteries were discharged at a constant voltage of 3.62 V, and the discharging was terminated at a current value of less than or equal to 31.9 µA, which corresponded to 0.01 C rate. After resting for 10 minutes, the batteries were discharged at 4.63 mA, which corresponded to 1.45 C rate, for 10 seconds, and by using an amount of the voltage drop, the output resistance was calculated according to Ohm's law (R = ΔV/0.00463). Next, the batteries were discharged at the constant current of 319 µA, which was a current value corresponding to 0.1 C rate, and the discharging was terminated at a voltage of 2.5 V (versus a Li/Li⁺ reference). Lastly, the batteries were discharged at a constant voltage of 2.5 V, and the discharging was terminated at a current value of less than or equal to 31.9 µA, which corresponded to 0.01 C rate. In the manner described above, the output resistance of the secondary batteries of Examples 1 to 3 were determined. The results are shown in Table 1 below.

### «Examples 4 to 6»

Coated positive electrode active materials and secondary batteries were prepared with the same procedure as that used in Examples 1 to 3, except that the coating solution was applied in a manner such that the average thickness of the LiNbO₃ could be 20 nm. In Examples 4 to 6, the average thickness of the LiNbO₃ coating layer (first coating layer) was 22 nm as measured with a cross-sectional SEM. In Examples 4 to 6, the volume ratios of the first coating layer to the positive electrode active material were all 2.6% as calculated from a cross-sectional SEM. In Examples 4 to 6, the volume ratios of the LTAF coating layer (second coating layer) to the positive electrode active material were 1.1%, 2.0%, and 2.5%, respectively, as calculated from a cross-sectional SEM.

### «Example 7»

49 g of the coated NCA and 1.46 g of the LTAF powder were added into a vessel of the NOB-MINI, and a coated positive electrode active material and a secondary battery were prepared with the same procedure as that used in Examples 4 to 6. In Example 7, the average thickness of the LiNbO₃ coating layer (first coating layer) was 22 nm as measured with a cross-sectional SEM. In Example 7, the volume ratio of the first coating layer to the positive electrode active material was 2.6% as calculated from a cross-sectional SEM. In Example 7, the volume ratios of the LTAF coating layer (second coating layer) to the positive electrode active material was 4.3% as calculated from a cross-sectional SEM.

### <<Comparative Example 1»

In Comparative Example 1, the positive electrode active material used was NCA on which the coating layers (the first coating layer and the second coating layer) were not formed. In an argon atmosphere glove box with a dew point of -60°C or less and an oxygen level of 5 vol-ppm or less, the positive electrode active material of Comparative Example 1 and Li₂S-P₂S₅, which was used as the first solid electrolyte, were weighed such that the volume ratio of the positive electrode active material to the first solid electrolyte could be 75:25. Furthermore, a conductive additive (VGCF-H, manufactured by Showa Denko K.K.) was weighed such that the conductive additive could be present in an amount of 1.5 mass% relative to the mass of the positive electrode active material. These were mixed together in an agate mortar to form a positive electrode material of Comparative Example 1. Subsequently, a secondary battery was prepared with the same procedure as that used in Examples 1 to 3.

### <<Reference Examples 1 to 4»

The LTAF powder and 49 g of NCA on which the LiNbO₃ coating layer was not formed, were added into a vessel of the NOB-MINI. The amounts of the LTAF powder were 0.31 g (Reference Example 1), 0.63 g (Reference Example 2), 0.95 g (Reference Example 3), and 1.46 g (Reference Example 4). A composing process was performed on the NCA and the LTAF at a rotational speed of 6000 rpm, for an operating time of 60 minutes, and at a power level of 550 W to 740 W. In this manner, positive electrode active materials coated exclusively with the LTAF were prepared. Secondary batteries were prepared with the same procedure as that used in Examples 1 to 3. In Reference Examples 1 to 4, the volume ratios of the LTAF layer (second coating layer) to the positive electrode active material were 1.2%, 2.0%, 2.6%, and 4.4%, respectively, as calculated from a cross-sectional SEM.

The evaluation of the output resistance was performed on the secondary batteries of Examples 4 to 7, Comparative Example 1, and Reference Examples 1 to 4 under the same conditions as those of Examples 1 to 3. The results are shown in Table 1 below.

**[Table 1]**

| | Average thickness of first coating layer (nm) | Volume ratio of first coating layer (%) | Volume ratio of second coating layer (%) | Output resistance of battery (Ω) |
|---|---|---|---|---|
| Example 1 | 14 | 1.7 | 1.2 | 54 |
| Example 2 | 14 | 1.7 | 2.0 | 47 |
| Example 3 | 14 | 1.7 | 2.5 | 49 |
| Example 4 | 22 | 2.6 | 1.1 | 50 |
| Example 5 | 22 | 2.6 | 2.0 | 47 |
| Example 6 | 22 | 2.6 | 2.5 | 49 |
| Example 7 | 22 | 2.6 | 4.3 | 56 |
| Comparative Example 1 | 0 | 0 | 0 | 485 |
| Reference Example 1 | 0 | 0 | 1.2 | 74 |
| Reference Example 2 | 0 | 0 | 2.0 | 49 |
| Reference Example 3 | 0 | 0 | 2.6 | 51 |
| Reference Example 4 | 0 | 0 | 4.4 | 52 |

### <<Discussion>>

The positive electrode active material of Examples 1 to 7 and the positive electrode active material of Comparative Example 1 were the same. However, the output resistances of Examples 1 to 7, in which the coating layers were provided, were significantly lower than that of Comparative Example 1, in which the coating layers were not provided. The volume ratios of the second coating layer of Example 1, Example 4, and Reference Example 1 were equal. However, the output resistances of Example 1 and Example 4, in which the first coating layer was provided, were lower than that of Reference Example 1, in which the first coating layer was not provided. The volume ratios of the second coating layer of Example 2, Example 5, and Reference Example 2 were equal. However, the output resistances of Example 2 and Example 5, in which the first coating layer was provided, were lower than that of Reference Example 2, in which the first coating layer was not provided. The volume ratios of the second coating layer of Example 3, Example 6, and Reference Example 3 were equal. However, the output resistances of Example 3 and Example 6, in which the first coating layer was provided, were lower than that of Reference Example 3, in which the first coating layer was not provided. Furthermore, the average thicknesses of the first coating layer of Examples 4 to 7 were equal. However, the output resistances of Example 4 to 6, in which the volume ratios of the second coating layer were less than or equal to 4%, were even lower than that of Example 7, in which the volume ratio of the second coating layer was greater than 4%.

The results of Examples 1 to 7, Comparative Example 1, and Reference Examples 1 to 4 shown in Table 1 confirmed the following facts. In instances where a coated positive electrode active material having a coating layer is used, the output resistance of a battery is significantly reduced compared with the instance in which a positive electrode active material not having a coating layer is used. Furthermore, in instances where the coated positive electrode active material has the first coating layer and the second coating layer, and the volume ratio of the second coating layer to the positive electrode active material is greater than or equal to 0.1% and less than or equal to 5%, the output resistance of a battery is reduced. When the volume ratio of the second coating layer to the positive electrode active material is less than 0.1%, the surface of the first coating layer formed of an oxide solid electrolyte cannot be sufficiently coated with the second coating material. Consequently, the formation of a resistive layer between the first coating layer and the second coating layer cannot be efficiently inhibited. When the volume ratio of the second coating layer to the positive electrode active material is less than or equal to 5%, excessive coating of the surface of the fundamental active material with the second coating material can be avoided. As a result, an electron conduction path between particles of the positive electrode active material is appropriately ensured. When the volume ratio of the second coating layer to the positive electrode active material is greater than or equal to 0.1% and less than or equal to 4%, or greater than or equal to 0.1% and less than or equal to 3%, the output resistance of a battery is further reduced. Furthermore, when the average thickness of the first coating layer is greater than or equal to 1 nm and less than or equal to 30 nm, the output resistance of a battery is reduced.

### Industrial Applicability

A battery of the present disclosure can be used, for example, as an all-solid-state lithium secondary battery.

### Reference Signs List

1000 positive electrode material
100 first solid electrolyte
110 positive electrode active material
111 first coating layer
112 second coating layer
120 fundamental active material
130 coated positive electrode active material
2000 battery
201 positive electrode
202 electrolyte layer
203 negative electrode

## Claims

1. A coated positive electrode active material comprising:
a positive electrode active material;
a first coating layer coating at least a portion of a surface of the positive electrode active material; and
a second coating layer coating at least a portion of a surface of a fundamental active material that includes the first coating layer and the positive electrode active material, wherein
the first coating layer contains an oxide solid electrolyte, and
the second coating layer contains Li, Ti, M, and F, where M is at least one element selected from the group consisting of Ca, Mg, Al, Y, and Zr.

2. The coated positive electrode active material according to claim 1, wherein a volume ratio of the second coating layer to the positive electrode active material is greater than or equal to 0.1% and less than or equal to 5%.

3. The coated positive electrode active material according to claim 1 or 2, wherein M is Al.

4. The coated positive electrode active material according to claim 3, wherein a material that forms the second coating layer is represented by composition formula (1) below:
Li_{α}Ti_{β}Al_{γ}F₆ (1)
where α, β, and γ satisfy α + 4β + 3γ = 6 and γ > 0.

5. The coated positive electrode active material according to claim 4, wherein γ satisfies 0.5 ≤ γ < 1.

6. The coated positive electrode active material according to claim 4, wherein α, β, and γ satisfy 2.5 ≤ α ≤ 2.9, 0.1 ≤ β ≤ 0.5, and 0.5 ≤ γ ≤ 0.9.

7. The coated positive electrode active material according to any one of claims 1 to 6, wherein the oxide solid electrolyte contains at least one selected from the group consisting of lithium niobate, lithium titanate, lithium aluminate, lithium silicate, lithium borate, lithium zirconate, and lithium tungstate.

8. The coated positive electrode active material according to any one of claims 1 to 7, wherein the oxide solid electrolyte contains lithium niobate.

9. The coated positive electrode active material according to any one of claims 1 to 8, wherein the first coating layer has an average thickness of greater than or equal to 1 nm and less than or equal to 50 nm.

10. The coated positive electrode active material according to any one of claims 1 to 9, wherein the positive electrode active material contains lithium nickel cobalt aluminate.

11. A positive electrode material comprising:
the coated positive electrode active material according to any one of claims 1 to 10; and
a first solid electrolyte.

12. The positive electrode material according to claim 11, wherein the first solid electrolyte includes a halide solid electrolyte.

13. The positive electrode material according to claim 11 or 12, wherein the first solid electrolyte includes a sulfide solid electrolyte.

14. A battery comprising:
a positive electrode including the positive electrode material according to any one of claims 11 to 13;
a negative electrode; and
an electrolyte layer disposed between the positive electrode and the negative electrode.

15. The battery according to claim 14, wherein the electrolyte layer contains a second solid electrolyte, and the second solid electrolyte includes a solid electrolyte having a same composition as a solid electrolyte that is present in the first solid electrolyte.

16. The battery according to claim 14, wherein the electrolyte layer contains a second solid electrolyte, and the second solid electrolyte includes a halide solid electrolyte having a different composition than a solid electrolyte that is present in the first solid electrolyte.

17. The battery according to claim 14, wherein the electrolyte layer contains a second solid electrolyte, and the second solid electrolyte includes a sulfide solid electrolyte.

18. A method for producing the coated positive electrode active material according to claim 1,
the method comprising processing a mixture with a dry particle-composing method, the mixture including a material that forms the second coating layer and the positive electrode active material with the at least a portion of a surface coated with the first coating layer, wherein
the dry particle-composing method includes applying mechanical energy of impact, compression, and shear to the mixture.

19. The method for producing the coated positive electrode active material according to claim 18, wherein a ratio Da/Dc, which is a ratio of Da to Dc, is greater than or equal to 2, where Da is an average particle diameter of the positive electrode active material with the at least a portion of a surface coated with the first coating layer, and Dc is an average particle diameter of the material that forms the second coating layer.

20. The method for producing the coated positive electrode active material according to claim 19, wherein the ratio Da/Dc is greater than or equal to 5.
